# EUROPEAN PATENT SPECIFICATION

(11) **EP 3 146 014 B1**
(45) Date of publication and mention of the grant of the patent: **15.04.2020**
(21) Application number: 15729265.7
(22) Date of filing: 15.05.2015
(51) Int. Cl.: C09K 11/77, H05B 33/14, H01L 33/50, F21K 99/00, F21K 2/00

(54) **SOURCE OF BROADBAND WHITE LIGHT GENERATED ON OXIDE MATRICES HIGHLY DOPED WITH RARE EARTH IONS, EXCITED BY INFRARED RADIATION**
QUELLE FÜR AUS OXIDMATRIZEN MIT HOHER SELTENERDIONENDOTIERUNG ERZEUGTES, DURCH INFRAROTSTRAHLUNG ERREGTES BREITBANDWEISSLICHT
SOURCE DE LUMIÈRE BLANCHE À LARGE BANDE GÉNÉRÉE SUR DES MATRICES D'OXYDE FORTEMENT DOPÉES D'IONS DE TERRES RARES, EXCITÉES PAR RAYONNEMENT INFRAROUGE

(30) Priority: 21.05.2014 PL 40828214
(43) Date of publication of application: 29.03.2017
(73) Proprietor: Instytut niskich temperatur i badan strukturalnych, 50-422 Wroclaw (PL)
(72) Inventor: MARCINIAK, Lukasz, 51-215 Wroclaw (PL); HRENIAK, Dariusz, 53-653 Wroclaw (PL); BEDNARKIEWICZ, Artur, 51-684 Wroclaw (PL); STREK, Wieslaw, 55-040 Bielany Wroclawskie (PL)
(74) Representative: Rzazewska, Dorota
(86) International application number: PCT/PL2015/000080
(87) International publication number: WO 2015/178785

(56) References cited:
- US-A1- 2012 064 134
- STREK W ET AL: "Infrared laser stimulated broadband white emission of Yb3+:YAG nanoceramics", OPTICAL MATERIALS, vol. 35, no. 11, 16 February 2013 (2013-02-16), pages 2013-2017, XP028699693, ISSN: 0925-3467, DOI: 10.1016/J.OPTMAT.2012.09.037
- MARCINIAK L ET AL: "Upconversion emission of LiNdP4O12and KNdP4O12crystals", JOURNAL OF LUMINESCENCE, vol. 133, 9 December 2011 (2011-12-09), pages 57-60, XP028957789, ISSN: 0022-2313, DOI: 10.1016/J.JLUMIN.2011.11.035
- JIWEI WANG ET AL: "Upconversion for White Light Generation by a Single Compound", JOURNAL OF THE AMERICAN CHEMICAL SOCIETY, vol. 132, no. 3, 27 January 2010 (2010-01-27), pages 947-949, XP055208351, ISSN: 0002-7863, DOI: 10.1021/ja909254u
- Jiwei Wang ET AL: "Luminous and tunable white-light upconversion for YAG Yb 3 Al 5 O 12 and Yb; Y 2 O 3 nanopowders", Optical Society of America OCIS, 28 October 2010 (2010-10-28), page 6810, XP055208352, Retrieved from the Internet: URL:https://www.osapublishing.org/DirectPD FAccess/89589472-C951-A6C2-B323AB06EE12C57 1_208269/ol-35-23-3922.pdf?da=1&id=208269& seq=0&mobile=no [retrieved on 2015-08-18]

## Description

The object of the invention is a source of broadband white according to claim 1.

In the prior art, there are several methods of obtaining white light by processes different from the phenomenon of black body radiation, i.e. incandescence. Methods based on the use of organic phosphors excited in the ultraviolet range (UV) and based on inorganic phosphors doped with transition metal ions or rare earth metal ions dominate among them.

European Patent Application EP 1 475 380 A1 discloses the use of organic compounds for generating white light, on the basis of the phenomenon of electroluminescence. The disadvantage of this solution is the lack of stability of light emission of a particular colour and gradual change of light colour towards yellow, and high wear of OLEDs, which makes the solution according to this invention not meet the expectations put upon modern lighting.

There are some methods suitable to obtain white light with rare earth doped phosphors known. These phosphors are excited by high-energy electromagnetic radiation typically from the range of ultraviolet, violet and blue light as a source of optical pumping, and emission in the range of visible radiation is obtained.

US Patent Application US 2005/0253113 A1 discloses the use of glasses doped with ions of lanthanides excited in the UV range to the range of blue light for obtaining white luminescence constituted of a plurality of narrow spectral lines occurring in the blue, green and red range of the electromagnetic spectrum. The colour of the such obtained light makes only impression of white light - the light is generally considered as "cold" and unfriendly in perception.

There are also some other methods of producing white light in materials doped with rare earth ions known, which exploit photoexcitation with infrared laser diodes, through the phenomenon of conversion of radiant energy upwards, known as up-conversion - UPC,. The method of obtaining white light is, in this case, based on obtaining quasi-white light by a combination of discrete and narrowband emission from the blue, green and red spectral range, in appropriate quantitative ratios. The light generated by this type of sources is characterised by a low colour rendering index due to the presence of narrow bands in the emission spectrum of these materials.

US Patent Application No US 2011/0309303 A1 discloses the use of oxyfluoride matrices co-doped with lanthanide ions for generating white light using optical pumping with infrared radiation. Emission of white light by means of matrices according to this invention uses the phenomenon of up-conversion through a combination of spectrally narrow emission lines characteristic for f-f transitions of lanthanide ions.

However, US Patent US7088040 B1 discloses the use of the phenomenon of up-conversion in matrices made of NaYF₄ doped with Er and Yb, of YLiF₄ doped with Tm and Yb, of YF₃ doped with Tm and Yb, and of YF₃ doped with Er and Yb ions. The radiation in this invention is absorbed by one of the dopant ions - the so called sensitizer (here Yb ions), and the radiation characteristic of the emitting lanthanide ions (the so called activator, here Er and Tm ions) on the third degree of oxidation is obtained by multiphoton processes, while this radiation is characterised by narrow spectral emission lines.

In the publication "Infrared laser simulated broadband white emission of Yb³⁺:YAG nanoceramics" Str 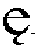 k et al., the authors disclosed the emission properties of Yb3+:YAG nanoceramic with 976 nm laser diode as the excitation line. More specifically, the effect of Yb+3 concentration on the white emission was examined. It turn out that the intensity of anti-Stokes white emission (ASWE) was strongly dependent on the incident excitation power. The publication mentions only that the measurement is performed at atmospheric pressure (1000 mbar) and reduced pressure of (0.01 mbar), without the detailed measurement method. Also the publication is silent about the thickness of the layer. Hence, the publication does not provide satisfactory technical contribution related to the white light source which might be useful for the skilled person in construction of such device.

In the publication "Upconversion emission of LiNdP₄O₁₂ and KNdP₄O₁₂ crystals" Marciniak et al., the upconversion spectra of LiNdP₄O₁₂ and KNdP₄O₁₂ crystals under normal atmospheric pressure were measured under 808 nm excitation line. It turn out that the emission intensity is not stable immediately after switching on laser diode but is characterized by very long build-up time and there are significant differences of the rise time between LiNdP₄O₁₂ and KNdP₄O₁₂ crystals. There is no mention about the thickness of an active element, which is an important technical feature for emission/absorption of the emitted light and decisive if such kind of crystal can serve as an optical active element in the white light source. Therefore, based on this teaching, the skilled person would not be encouraged to exploit such crystals as the active element of the white light source, wherein the emission and the stabilisation of the colour of emitted light is needed.

The aim of the present invention is to provide a source of white light, with a broad spectrum of radiation in the range of visible light and with a stable colour throughout the lifetime of the source, and with a colour rendering index which will not result in distortions in the perception of colours and in eye fatigue of the person working in the lighting using this type of light source.

The essence of the solution according to the invention is that the source of white light comprising at least one white light emitting device composed of a transparent glass/quartz chamber, a vacuum chamber comprising an optically active element, a spacer, a focusing lens, an IR laser diode and a power supply unit, and is further characterised in that the optically active element arranged in the vacuum chamber is a layer of matrix selected from the group consisting of Ca₉Nd(OH)₂, Ca₉Yb(OH)₂, NaNdP₄O₁₂, RbNdP₄O₁₂, RbYbP₄O₁₂, wherein the thickness of the layer being not higher than 10 mm and the layer is in the form of nanocrystalline or microcrystalline powder, glass, crystal, nanoceramics, nanocomposite.

Preferably, the optically active element, after excitation with a radiation beam generated by the IR laser diode, emits white light with a colour rendering index, CRI, above 90. High colour rendering index obtained for the source of white light according to the invention does not introduce distortions in the perception of colours and does not originate in the eye's fatigue of the person working in the lighting using this type of light source, therefore particularly preferably, the colour rendering index obtained for the source of white light according to the invention is close to 100.

Preferably, in the solution according to the invention, the IR laser diode emits radiation in the near infrared range having a wavelength of 800-1200 nm.

When, in the solution according to the invention, the optically active element is doped with a single type of optically active ion, e.g. Nd³⁺ or Yb³⁺, excitation wavelength generated by the IR laser diode is respectively approx. 808 nm for the matrix doped with Yb³⁺ ions, and approx. 940-980 nm for the matrix doped with Nd³⁺ ions.

In the solution according to the invention, the optically active element absorbs radiation from the near infrared range, which allows generating the broadband radiation, covering almost the entire range of visible electromagnetic radiation.

Preferably, in the solution according to the invention, the pressure value in the vacuum chamber, in which the optically active element is located, is in the range of 10³ -10⁻⁶ mbar. More preferably, the pressure value is 10⁻³ mbar.

In the solution according to the invention, the intensity of visible light emission is adjusted with the power of optical pumping or with the pressure of surrounding gases.

Due to the fact that the intensity of light emission is strongly dependent on density of optical pumping, it is possible to modulate the emission intensity by varying the distance between the lens and the optically active element. The closer this distance is to the focal length value, the higher intensity of light emission is obtained.

Further, the intensity of white light emission in the solution according to the invention is inversely proportional to the pressure of gases surrounding the optically active element, therefore the intensity of white light emission can be also controlled by adjusting the pressure of gases surrounding the optically active element within the vacuum chamber.

The source of white light according to the invention obtains an electro optical efficiency of approx. 10%.

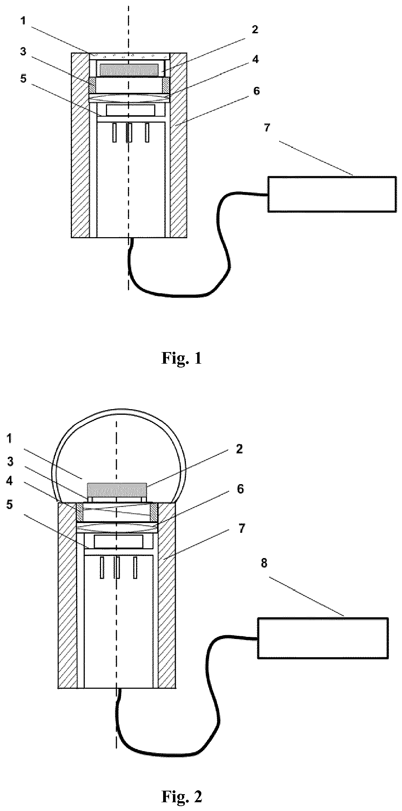

The object of the invention is illustrated in the schematic drawing in which Fig.1, Fig.2 and Fig.3 show the device generating white light in a vertical section view.

The device shown in Fig.1 is composed of a chamber 6 closed at the top with a transparent flat frontal area 1 within which further elements are placed, where from the front side 1 of the chamber 6, first, there is a vacuum chamber 2 comprising an optically active element, and then a spacer 3, a focusing lens 4, an IR diode 5 connected to a laser diode power supply unit 7.

The device shown in Fig. 2 is composed of a chamber 7 closed at the top with a transparent frontal area 1 in the form of a glass or quartz bulb within which further elements are placed, where from the front side 1 of the chamber 7, first, there is a vacuum chamber 2 comprising an optically active element, and then a pedestal 3, a spacer 4, a focusing lens 6, an IR diode 5 connected to a laser diode power supply unit 8.

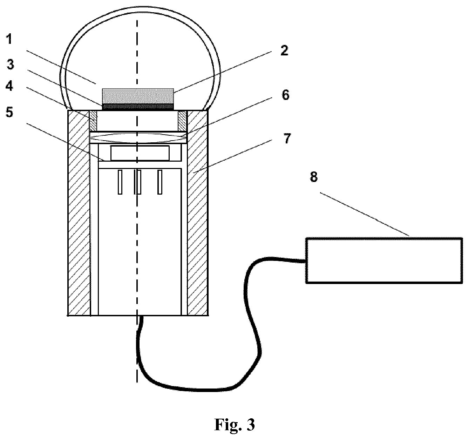

The device shown in Fig. 3 is composed of a chamber 7 closed at the top with a transparent frontal area 1 in the form of a glass or quartz bulb within which further elements are placed, where from the front side 1 of the chamber 7, first, there is a vacuum chamber 2 comprising an optically active element, and then a mirror 3, a spacer 4, a focusing lens 6, an IR diode 5 connected to a diode power unit 8.

According to the invention, independently from whether the source of white light is to emit a beam of white light pointwise or it is to be scattered, the frontal area of the upper end of the chamber may be flat or convex. To further strengthen the emission intensity of a beam of white light generated by the solution according to the invention, between the vacuum chamber comprising the optically active element and the spacer, a pedestal with a low thermal conductivity or a dielectric mirror reflecting radiation from the VIS range, transparent to IR radiation, can be placed.

The invention may find application in the lighting industry. Due to its characteristics distinguished by low power consumption (energy savings) as well as spectral characteristics (broadband emission covering the entire range of visible radiation), it may replace the currently used fluorescent tubes, LEDs, etc.

Comparison of energy consumption of the currently used types of lighting is presented in the table below:

| Parameters | Invention | LEDs | Fluorescent tubes | Traditional light bulb |
|---|---|---|---|---|
| Expected lifetime of bulb | 10,000 | 50,000 | 10,000 | 1,200 |
| Amount of watts (equivalent to 60-watt traditional light bulb) | 2 | 10 | 14 | 60 |
| Average cost of bulb (PLN) | 217 | 111 | 15 | 5 |
| Amount of energy in KWhs consumed during 50,000 hours of operation of bulb | 100 | 500 | 700 | 3,000 |
| Cost of electricity (approx. PLN 0.628 per KWh) | 63 | 314 | 440 | 1,884 |
| Required number of bulbs per 50,000 hours of operation | 5 | 1 | 5 | 42 |
| Cost of bulbs for 50,000 hours of operation | 1,085 | 111 | 61 | 163 |
| Total cost for 50,000 hours of operation | 1,148 | 425 | 501 | 2,047 |

In the following, Example 4 is presented as an Example according to the invention. Examples 1-3 and 5-10 are Reference Examples.

### Example 1

In a glass chamber, closed at the top with a transparent flat frontal area, a chamber with an optically active element in the form of a layer of nanocrystalline NaYbF₄ powder with a thickness of up to 2 mm was placed. Pressure in a vacuum chamber is below 10³ mbar. Upon excitation of a matrix by a laser diode elements emitting a 980 nm laser beam, white light of warm colour was obtained.

### Example 2

In a glass chamber, closed at the top with a transparent flat frontal area, a chamber with an optically active element in the form of a layer of nanocrystalline NaNdF₄ powder with a thickness of 1 mm was placed. Pressure in a vacuum chamber is below 10⁻³ mbar.

Upon excitation of a matrix by a laser diode elements emitting a 980nm laser beam, white light of warm colour was obtained.

### Example 3

In a glass chamber, closed at the top with a transparent flat frontal area, a chamber with an optically active element in the form of a layer of nanoceramics LiLaF₄ with a thickness of 2 mm, doped with 75 at% of Nd³⁺ ions, was placed. The distance between a lens and the optically active element is 3mm, and the pressure in a vacuum chamber is 10 mbar.

Upon excitation of a matrix by a laser diode elements emitting a 980 nm laser beam, white light of warm colour and CRI of 94 was obtained.

### Example 4

In a glass chamber, closed at the top with a transparent flat frontal area in the form of a quartz spherical buble, on a dielectric mirror, a chamber with an optically active element in the form of a layer of Ca₉Nd(OH)₂ crystal with a thickness of 5mm was placed. The distance between a lens and the optically active element is 7 mm, and the pressure in a vacuum chamber is 10⁻¹ mbar. Upon excitation of a matrix by a laser diode elements emitting a 808 nm laser beam, white light of warm colour and CRI of 87 was obtained.

### Example 5

In a glass chamber, closed at the top with a transparent flat frontal area in the form of a quartz spherical bulb, on a dielectric mirror, a chamber with an optically active element in the form of a layer of Ca₉La(OH)₂ crystal with a thickness of 5 mm, doped with 35 at% of Yb³⁺ ions, was placed. The distance between a lens and the optically active element is 4 mm, and the pressure in a vacuum chamber is 10² mbar.

Upon excitation of a matrix by a laser diode elements emitting a 808 nm laser beam, white light of warm colour and CRI of 94 was obtained.

### Example 6

In a glass chamber, closed at the top with a transparent flat frontal area in the form of a quartz spherical bulb, on a dielectric mirror, a chamber with an optically active element in the form of a layer of NaLaP₄O₁₂ crystal with a thickness of 5 mm, doped with 5 at% of Nd³⁺ ions, was placed. The distance between a lens and the optically active element is 2 mm, and the pressure in a vacuum chamber is 10⁻⁶ mbar. Upon excitation of a matrix by a laser diode elements emitting a 808 nm laser beam, white light of warm colour and CRI of 92 was obtained.

### Example 7

In a glass chamber, closed at the top with a transparent flat frontal area in the form of a quartz spherical bulb, on a dielectric mirror, a chamber with an optically active element in the form of a layer of RbNdP₄O₁₂ crystal with a thickness of 5 nm was placed. The distance between a lens and the optically active element is 10 mm, and the pressure in a vacuum chamber is 10⁻⁴ mbar. Upon excitation of a matrix by a laser diode elements emitting a 808 nm laser beam, white light of warm colour and CRI of 85 was obtained.

### Example 8

In a glass chamber, closed at the top with a transparent flat frontal area in the form of a quartz spherical bulb, on a dielectric mirror, a chamber with an optically active element in the form of a layer of KLaP₄O₁₂ crystal with a thickness of 50 nm, doped with 80 at% of Nd³⁺ ions, was placed. The distance between a lens and the optically active element is 7 mm, and the pressure in a vacuum chamber is 10⁻³ mbar. Upon excitation of a matrix by a laser diode elements emitting a 808 nm laser beam, white light of warm colour and CRI of 87 was obtained.

### Example 9

In a glass chamber, closed at the top with a transparent flat frontal area in the form of a quartz spherical bulb, on a dielectric mirror, a chamber with an optically active element in the form of a layer of NaYbP₄O₁₂ crystal with a thickness of 5mm was placed. The distance between a lens and the optically active element is 4 mm, and the pressure in a vacuum chamber is 10⁻³ mbar. Upon excitation of a matrix by a laser diode elements emitting a 975 nm laser beam, white light of warm colour and CRI of 95 was obtained.

### Example 10

In a glass chamber, closed at the top with a transparent flat frontal area in the form of a quartz spherical bulb, on a dielectric mirror, a chamber with an optically active element in the form of a layer of RbYP₄O₁₂ crystal with a thickness of 250 nm, doped with 50 at% of Yb³⁺ ions, was placed. The distance between a lens and the optically active element is 3 mm, and the pressure in a vacuum chamber is 10⁻³ mbar. Upon excitation of a matrix by a laser diode elements emitting a 980 nm laser beam, white light of warm colour and CRI of 92 was obtained.

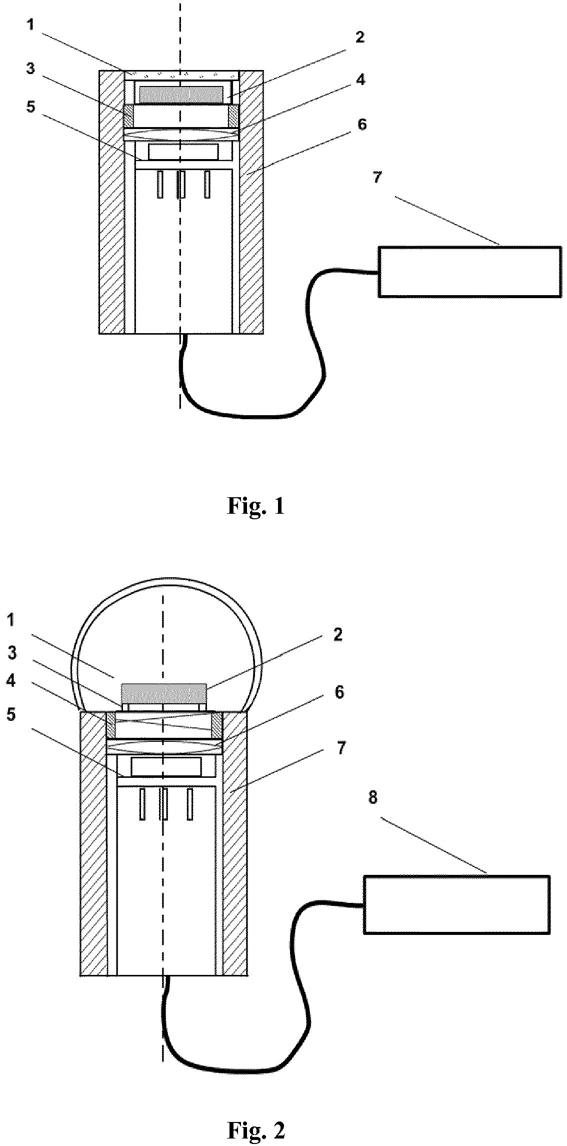

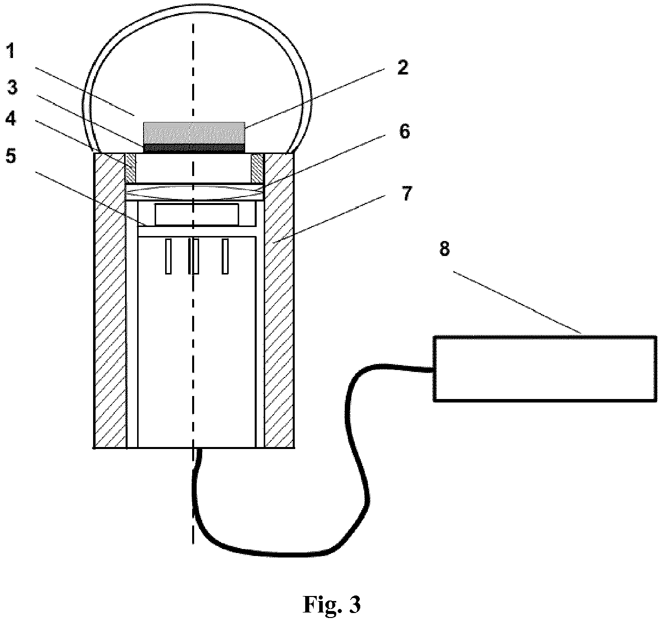

## Claims

1. A source of white light comprising at least one white light emitting device composed of a transparent glass/quartz chamber, a vacuum chamber comprising an optically active element, a spacer, a focusing lens, an IR laser diode and a power supply unit, **characterised in that** the optically active element is positioned within the vacuum chamber (2) and it is the form of layer of matrix selected from the group consisting of Ca₉Nd(OH)₂, Ca₉Yb(OH)₂, NaNdP₄O₁₂, RbNdP₄O₁₂, RbYbP₄O₁₂, wherein the thickness of the layer being not higher than 10 mm and the layer is in the form of nanocrystalline or microcrystalline powder, glass, crystal, nanoceramics, nanocomposite.

2. The source of white light according to claim 1, **characterised in that** the wavelength of the radiation generated by the IR laser diode is in the range of 800-1200 nm.

3. The source of white light according to claim 1, **characterised in that** the pressure value in the chamber comprising the optically active element is in the range of 10³ -10⁻⁶ mbar, preferably 10⁻³ mbar.

## Patentansprüche

1. Weißlichtquelle mit mindestens einer Weißlicht-Emissionsvorrichtung, die aus einer Kammer aus transparentem Glas/Quarzglas, einer Vakuumkammer mit einem optisch aktiven Element, einem Abstandshalter, einer Fokussierlinse, einer IR-Laserdiode und einer Stromversorgungseinheit besteht, **dadurch gekennzeichnet, dass** das optisch aktive Element innerhalb der Vakuumkammer (2) positioniert ist und in Form einer Schicht einer Matrix ausgebildet ist, die aus der Gruppe ausgewählt ist, die aus Ca₉Nd(OH)₂, Ca₉Yb(OH)₂, NaNdP₄O₁₂, RbNdP₄O₁₂, RbYbP₄O₁₂ besteht, wobei die Schicht nicht dicker sein darf als 10 mm und in Form von nanokristallinem oder mikrokristallinem Pulver, Glas, Kristall, Nanokeramik, Nanokomposit ausgebildet ist.

2. Weißlichtquelle nach Anspruch 1, **dadurch gekennzeichnet, dass** die Wellenlänge der von der IR-Laserdiode erzeugten Strahlung im Bereich von 800-1200 nm liegt.

3. Weißlichtquelle nach Anspruch 1, **dadurch gekennzeichnet, dass** der Druckwert in der Vakuumkammer, in der das optisch aktive Element untergebracht ist, im Bereich von 10³ bis 10⁻⁶ mbar, vorzugsweise 10⁻³ mbar liegt.

## Revendications

1. Source de lumière blanche comprenant au moins un dispositif 'emetteur de lumière blanche composé d'une chambre transparente en verre/quartz, d'une chambre à vide comprenant un élément optiquement actif, d'un élément espaceur, d'une lentille de focalisation, d'une diode laser IR et d'une unité d'alimentation, **caractérisé en ce que** l'élément optiquement actif est positionné à l'intérieur de la chambre à vide (2) et il est sous la forme d'une couche de matrice choisie dans le groupe constitué par Ca₉Nd(OH)₂, Ca₉Yb(OH)₂, NaNdP₄O₁₂, RbNdP₄O₁₂, RbYbP₄O₁₂, dans lequel l'épaisseur de la couche est au plus égale à 10 mm et la couche est sous la forme d'une poudre nanocristalline ou microcristalline de verre, de cristal, de nanocéramiques, de nanocomposite.

2. Source de lumière blanche selon la revendication 1, **caractérisée en ce que** la longueur d'onde du rayonnement généré par la diode laser IR se situe dans la plage de 800-1200 nm.

3. Source de lumière blanche selon la revendication 1, **caractérisée en ce que** la valeur de pression dans la chambre comprenant l'élément optiquement actif est dans la plage de 10³ à 10⁻⁶ mbar, de préférence 10⁻³ mbar.
